# EUROPEAN PATENT SPECIFICATION

(11) **EP 2 277 396 B1**
(45) Date of publication and mention of the grant of the patent: **09.05.2012**
(21) Application number: 10177208.5
(22) Date of filing: 16.08.2005
(51) Int. Cl.: A23L 1/317

(54) **A restructured meat product and process for preparing same**
Restrukturiertes Fleischprodukt und zugehöriges Herstellungsverfahren
Produits carnes reconstitues et procédé de fabrication

(30) Priority: 16.08.2004 US 919421; 16.08.2005 US 204454
(43) Date of publication of application: 26.01.2011
(62) Divisional of application: 05785241.0
(73) Proprietor: Solae, LLC, St. Louis, MO 63110 (US)
(72) Inventor: McMindes, Matthew K., Chesterfield, Missouri 63017 (US); Godinez, Eduardo, Chesterfield, Missouri 63017 (US)
(74) Representative: Hirsch & Associés

(56) References cited:
- CH-A5- 687 116
- US-A- 3 897 572
- US-A- 4 132 809
- PEDERSEN H E ET AL: "Meat and vegetarian applications of soya protein concentrates.", FOOD TECH EUROPE, vol. 1, no. 5, 1994, XP009058004,
- BEERY K E ET AL: "(In 'Proceedings of the world congress on vegetable protein utilization in human foods and animal feedstuffs'. Conference. Singapore, October 1988. PO Box 3489 Champaign, IL 61826, USA; American Oil Chemists' Society ((see FSTA (1991) 23 8G9)).)", CENTRAL SOYA CO., PO BOX 1400, FORT WAYNE, IN 46801, USA, 1988, page 62, XP001207822,
- LECOMTE N B ET AL: "SOYA PROTEINS FUNCTIONAL AND SENSORY CHARACTERISTICS IMPROVED IN COMMINUTED MEATS", JOURNAL OF FOOD SCIENCE, INSTITUTE OF FOOD TECHNOLOGISTS, CHICAGO, IL, US, vol. 58, no. 3, 1 May 1993 (1993-05-01), pages 464-466,472, XP000383212, ISSN: 0022-1147

## Description

### Field of the Invention

This invention relates to a restructured meat product as well as a process for preparing the restructured meat product by the combination of a soy protein material, comminuted meat and water, such that a value added meat product having a texture similar to that of intact muscles is obtained. The soy protein containing material may further contain starches, flour and fibers.

### Background of the Invention

An important aspect of the present invention is the development of an untexturized protein product into a texturized protein product. Particularly, the present invention provides a product and method for taking an untexturized, paste-like, batter-like protein product with no visible grain or texture and converting it into a texturized, protein product with a definite shape having the consistency of cooked muscle meat.

The term texture describes a wide variety of physical properties of a food product. A product of acceptable texture is usually synonymous with the quality of a product. Texture has been defined as "the attribute of a substance resulting from a combination of physical properties and perceived by senses of touch, including kinaestheses and mouth feel, sight, and hearing. Texture, as defined by the International Organization of Standardization, is "all of the theological and structural (geometric and surface) attributes of a food product perceptible by means of mechanical, tactual and, where appropriate, visual and auditory receptors." The following terms have been used to describe product characteristics falling under the umbrella "texture":

**TABLE I**

| ABRIDGED LIST OF FOOD TEXTURE ADJECTIVES | | | |
|---|---|---|---|
| Adhesive | Fleshy | Mushy | Soft |
| Bouncy | Fluffy | Oily | Soggy |
| Brittle | Foamy | Pasty | Sparkly |
| Bubbly | Fragile | Plastic | Splintery |
| Chewy | Full-bodied | Porous | Spongy |
| Clingy | Gooey | Powdery | Springy |
| Coating | Grainy | Puffy | Sticky |
| Cohesive | Gritty | Pulpy | Stringy |
| Creamy | Gummy | Rich | Syrupy |
| Crisp | Hard | Rough | Tender |
| Crumbly | Heavy | Rubbery | Thick |
| Crusty | Heterogeneous | Runny | Thin |
| Dense | Juicy | Sandy | Tingly |
| Doughy | Lean | Scratchy | Tough |
| Dry | Light | Short | Uniform |
| Elastic | Limp | Silky | Viscous |
| Fatty | Lumpy | Slippery | Watery |
| Firm | Moist | Slivery | Waxy |
| Flaky | Mouth coating | Smooth | Wiggly |

Accelerated attention has been given to texture as it pertains to newer food substances including fabricated and imitation products, formed meat and fish products, where very serious efforts are made by processes to duplicate the properties of the original or other natural food substances. The use of non-traditional raw materials, synthetic flavors, fillers, and stretchers all tend to alter certain textural characteristics of the finished product. Frequently, the imitation of textural properties is of much greater difficulty in the replication of taste, odors, and colors. Numerous manipulative processes, including extrusion texturization, have been developed to simulate natural textural properties. The processes generally find it prudent to duplicate the properties of the original substances to the extent feasible technically and economically in order to promote early market acceptance. While texture has attributes related to appearance, it also has attributes related to touch and also mouth feel or interaction of food when it comes in contact with the mouth. Frequently, these sensory perceptions involved with chewing can relate to impressions of either desirability or undesirability.

Thus, textural terms include terms relating to the behavior of the material under stress or strain and include, for example, the following: firm, hard, soft, tough, tender, chewy, rubbery, elastic, plastic, sticky, adhesive, tacky, crispy, crunchy, etc. Secondly, texture terms may be related to the structure of the material: smooth, fine, powdery, chalky, lumpy, mealy, coarse, gritty, etc. Third, texture terms may relate to the shape and arrangement of structural elements, such as: flaky, fibrous, stringy, pulpy, cellular, crystalline, glassy, spongy, etc. Last, texture terms may relate to mouth feel characteristics, including: mouth feel, body, dry, moist, wet, watery, waxy, slimy, mushy, etc.

As used herein, "untexturized" and "texturized" describe the characteristics of the food product as set forth in Table II:

**TABLE II**

| | Untexturized Characteristic | Texturized Characteristic |
|---|---|---|
| Behavior of Material under Stress or Strain | sticky gooey plastic | firm chewy |
| | | |
| Structure of Material | smooth | coarse |
| | | |
| Shape and Arrangement of Structural Elements | gelatinous pulpy pasty | fibrous crusty |
| | | |
| Mouth Feel mushy with body | creamy dry | moist |

Petersen's particle (Meat and vegetarian applications of soya protein concentrate, FOOD TECH EUROPE Vol. 1, n°5, 1994) presents the characteristics and functional properties of milled, textured and functional soya protein concentrates.

Berry et all (Proceedings of the world congress on vegetable protein utilization in human foods and animal feedstuffs: conference. Singapore, October 1988, PO BOX 3489 Campaign, IL. 6128 USA) discloses the preparation of soy protein concentrate products (SCP) and their application in food system. SCP has a high protein level content and has varied textural or functional type. Thus SPC adds significant nutrition and/or physical attributes to food products. SPC is used as a replacement ingredient for more expensive soy protein isolates and dairy proteins in many food systems.

Lecomte et al (Soya proteins functional and sensory characteristics improved in communited meats: journal of food science, institute of food technologist. Chicago, Il US vol 58, n°3, 1 may 1993. page 464-466,472) discloses that Soya protein in form of flour, concentrate or isolate can be incorporated in formulation of frankfurters as preemulsified fat (PEF) and as powders. Sensory analysis showed that incorporation of soya proteins as PEF resulted in a reduction of specific soybean off-flavor (beany and bitterness notes) and off-aroma. Soya protein added as PEF increased water-holding capacity and yield, decreased cook losses ans has no detrimental effect on color. Using soya proteins as stabilizer in PEF could improve functionality of these proteins and sensory characteristics of communited meats to which they are added.

CH687116 discloses a novel meat-based food product, in mince or hamburger form in a sealed package under a controlled atmosphere, said meat-based food product contains 10-40% vegetable (preferably soya) protein. The product optionally also contains seasonings. white salt and spices; and/or taste additives such as tomato, onions or green pepper.

US 3,897,572 relates to a method for making a simulated fat-marbled formed meat chunk by comminuting meat and meat by-products and admixing the same with from about 5 to about 50 percent by weight of a moisture binding agent to form a red meat portion; grinding and emulsifying a second portion of meat and meat by-products and admixing the same with about 5 to about 50 percent by weight of a moisture binding agent and about 0.5 to about 10 percent by weight of a white food coloring agent, to form a white meat portion; forming a heterogeneous admixture of red and white meat portions by blending a major part of said red meat portion with a minor part of said white meat portion until said red meat portion is webbed with said white meat portion; extruding said heterogeneous admixture into a desired form cooking said extrudate, and dividing the cooked extrudate to the desired size. The moisture binding agents which may be used in this method include wheat gluten, powdered egg, soya protein and mixtures thereof.

US 4,132,809 relates to formulation and manufacture of a meat substitute (and meat extender) base derived from textured soy protein particles and a "functional proteins source" such as whey solids, skim milk solids, egg solids and/or wheat gluten to yield a cotextured particle which closely resembles freshly cooked ground meat, both as initially prepared and after prolonged cooking, and to a process for preserving same in a semimoist, ready to use condition.

### Summary of the Invention

The present applications discloses a restructured meat product, comprising:
(A) a fibrous material containing soy protein, soy cotyledon fiber, wheat gluten and starch, wherein said fibrous material is an extrudate and wherein said soy cotyledon fiber is present in the fibrous material in an amount of from 1% to 8%, by weight on a moisture free basis, said wheat gluten is present in an amount of from 10% to 30% by weight on a moisture free basis, and said starch is present in the fibrous material in an amount from 5% to 15%, by weight on a moisture free basis ;
(B) a comminuted meat, wherein said comminuted meat is derived from an animal tissue comprising muscle tissue, organ tissue, connective tissue, skin or mixtures of each with the other; and
(C) water.

In another embodiment, the present application discloses a process for preparing a restructured meat product, comprising the steps of hydrating in water until the water is absorbed and the fibers are separated:
(A) a fibrous material containing soy protein, soy cotyledon fiber, wheat gluten and starch, wherein said fibrous material is an extrudate and wherein said soy cotyledon fiber is present in the fibrous material in an amount of from 1% to 8%, by weight on a moisture free basis, said wheat gluten is present in an amount of from 10% to 30% by weight on a moisture free basis, and said starch is present in the fibrous material in an amount from 5% to 15%, by weight on a moisture free basis ; and
   adding
(B) a comminuted meat, wherein said comminuted meat is derived from an animal tissue comprising muscle tissue, organ tissue, connective tissue, skin or mixtures of each with the other and the temperature of the comminuted meat is below 10°C; and
mixing the fibrous material and the comminuted meat to produce a homogeneous, fibrous and texturized meat product having a moisture content of at least 50%.

### Detailed Description of the Invention

Mechanically deboned meat (MDM) is a meat paste that is recovered from beef, pork and chicken bones using commercially available equipment. MDM is a comminuted product that is devoid of the natural fibrous texture found in intact muscles. The lack of fibrosity constrains the utility of MDM and most often limits its use to the manufacture of comminuted sausages such as frankfurters and bologna.

### Definitions

As used herein, the term "soy material" is defined as a material derived from whole soybeans which contains no non-soy derived additives. Such additives may, of course, be added to a soy material to provide further functionality or nutrient content in an extruded meat analog containing the soy material. The term "soybean" refers to the species *Glycine max, Glycine soja,* or any species that is sexually cross compatible with *Glycine max.*

The term "protein content" as used herein, refers to the relative protein content of a soy material as ascertained by A.O.C.S. (American Oil Chemists Society) Official Methods Bc 4-91(1997), Aa 5-91(11997), or Ba 4d-90(1997), which determine the total nitrogen content of a soy material sample as ammonia, and the protein content as 6.25 times the total nitrogen content of the sample.

The Nitrogen-Ammonia-Protein Modified Kjeldahl Method of A.O.C.S. Methods Bc4-91 (1997), Aa 5-91 (1997), and Ba 4d-90(1997) used in the determination of the protein content may be performed as follows with a soy material sample. From 0.0250 - 1.750 grams of the soy material are weighed into a standard Kjeldahl flask. A commercially available catalyst mixture of 16.7 grams potassium sulfate, 0.6 grams titanium dioxide, 0.01 grams of copper sulfate, and 0.3 grams of pumice is added to the flask, then 30 milliliters of concentrated sulfuric acid is added to the flask. Boiling stones are added to the mixture, and the sample is digested by heating the sample in a boiling water bath for approximately 45 minutes. The flask should be rotated at least 3 times during the digestion. 300 milliliters of water is added to the sample, and the sample is cooled to room temperature. Standardized 0.5N hydrochloric acid and distilled water are added to a distillate receiving flask sufficient to cover the end of a distillation outlet tube at the bottom of the receiving flask. Sodium hydroxide solution is added to the digestion flask in an amount sufficient to make the digestion solution strongly alkaline. The digestion flask is then immediately connected to the distillation outlet tube, the contents of the digestion flask are thoroughly mixed by shaking, and heat is applied to the digestion flask at about a 7.5-min boil rate until at least 150 milliliters of distillate is collected. The contents of the receiving flask are then titrated with 0.25N sodium hydroxide solution using 3 or 4 drops of methyl red indicator solution - 0.1% in ethyl alcohol. A blank determination of all the reagents is conducted simultaneously with the sample and similar in all respects, and correction is made for blank determined on the reagents. The moisture content of the ground sample is determined according to the procedure described below (A.O.C.S Official Method Ba 2a-38). The nitrogen content of the sample is determined according to the formula: Nitrogen (%) = 1400.67 x [[(Normality of standard acid) x (Volume of standard acid used for sample (ml))] - [(Volume of standard base needed to titrate 1 ml of standard acid minus volume of standard base needed to titrate reagent blank carried through method and distilled into 1 ml standard acid (ml)) x (Normality of standard base)] - [(Volume of standard base used for the sample (ml)) x (Normality of standard base)]] / (Milligrams of sample). The protein content is 6.25 times the nitrogen content of the sample.

The term "moisture content" as used herein refers to the amount of moisture in a material. The moisture content of a material can be determined by A.O.C.S. (American Oil Chemists Society) Method Ba 2a-38 (1997). According to the method, the moisture content of a material may be measured by passing a 1000 gram sample of the ground material through a 6 x 6 riffle divider, available from Seedboro Equipment Co., Chicago, Illinois, and reducing the sample size to 100 grams. The 100 gram sample is then immediately placed in an airtight container and weighed. Five grams of the sample ("Sample Weight") are weighed onto a tared moisture dish (minimum 30 gauge, approximately 50 x 20 millimeters, with a tight-fitting slip cover - available from Sargent-Welch Co.). The dish containing the sample is placed in a forced draft oven and dried at 130 ± 3°C for 2 hours. The dish is then removed from the oven, covered immediately, and cooled in a dissector to room temperature. The dish is then weighed to obtain a Dry Weight. Moisture content is calculated according to the formula: Moisture content (%) = 100 x [(Sample Weight - Dry Weight) / Sample Weight].

The term "weight on a moisture free basis" as used herein refers to the weight of a material after it has been dried to completely remove all moisture, e.g. the moisture content of the material is 0%. Specifically, the weight on a moisture free basis of a soy material can be obtained by weighing the soy material after the soy material has been placed in a 45°C oven until the soy material reaches a constant weight.

The term "soy protein isolate" as used herein is used in the sense conventional to the soy protein industry. Specifically, a soy protein isolate is a soy material having a protein content of at least about 90% soy protein on a moisture free basis. "Isolated soy protein", as used in the art, has the same meaning as "soy protein isolate" as used herein and as used in the art. A soy protein isolate is formed from soybeans by removing the hull and germ of the soybean from the cotyledon, flaking or grinding the cotyledon and removing oil from the flaked or ground cotyledon, separating the soy protein and carbohydrates of the cotyledon from the cotyledon fiber, and subsequently separating the soy protein from the carbohydrates.

The term "soy protein concentrate" as used herein is used in the sense conventional to the soy protein industry. Specifically, a soy protein concentrate is a soy material having a protein content of from about 65% to less than about 90% soy protein on a moisture-free basis. Soy protein concentrate also contains soy cotyledon fiber, typically from about 3.5% up to about 20% soy cotyledon fiber by weight on a moisture-free basis. A soy protein concentrate is formed from soybeans by removing the hull and germ of the soybean from the cotyledon, flaking or grinding the cotyledon and removing oil from the flaked or ground cotyledon, and separating the soy protein and soy cotyledon fiber from the carbohydrates of the cotyledon.

The term "soy protein flour" as used herein, refers to a comminuted form of defatted soybean material, preferably containing less than about 1% oil, formed of particles having a size such that the particles can pass through a No. 100 mesh (U.S. Standard) screen. The soy cake, chips, flakes, meal, or mixture of the materials are comminuted into a soy flour using conventional soy grinding processes. Soy flour has a soy protein content of about 49% to about 65% on a moisture free basis. Preferably the flour is very finely ground, most preferably so that less than about 1% of the flour is retained on a 300 mesh (U.S. Standard) screen.

Rice is a starchy food containing from about 6% to about 10% protein. The term "rice flour" as used herein relates to an inexpensive by-product of rice milling obtained by grinding broken rice. Conventional milling practices produce rice flour composed largely of about 80% carbohydrates. Because of the low concentration of protein in rice and the resulting bulk required to obtain a satisfactory protein intake, infants and children cannot eat a sufficient amount to meet their protein requirements.

The term "starch" as used herein, is intended to include all starches derived from any native source, any of which may be suitable for use herein. A native starch as used herein, is one as it is found in nature. Also suitable are starches derived from a plant obtained by standard breeding techniques including crossbreeding, translocation, inversion, transformation or any other method of gene or chromosome engineering to include variations thereof. In addition, starch derived from a plant grown from artificial mutations and variations of the above generic composition, which may be produced by known standard methods of mutation breeding, are also suitable herein.

Typical sources for the starches are cereals, tubers, roots, legumes and fruits. The native source can be a waxy variety of corn (maize), pea, potato, sweet potato, banana, barley, wheat, rice, oat, sago, amaranth, tapioca (cassava), arrowroot, canna, and sorghum particularly maize, potato, cassava, and rice. As used herein, the term "waxy" or "low amylose" is intended to include a starch containing no more than about 10% by weight amylose. Particularly suitable in the invention are those starches which contain no more than about 5% amylose by weight.

The term "gluten free starch" relates to modified tapioca starch, the main ingredient in many of bakery mix products. Gluten free or substantially gluten free starches are made from wheat-, corn-, and tapioca-based starches and are "gluten-free" because they do not contain gluten from wheat, oats, rye or barley - a factor of particular importance for people diagnosed with celiac disease and/or wheat allergies.

The term "wheat flour" relates to a flour obtained from the milling of wheat. The particle size of wheat flour typically is from about 14-120 µm. Wheat flour typically contains from about 11.7 to about 14% protein and from about 3.7 to about 10.9% fiber.

The term "gluten" relates to a protein fraction in wheat flour, that possesses a high protein content as well as unique structural and adhesive properties. In its freshly extracted wet state it is known as gum gluten, and when thereafter dried it becomes a free-flowing powder of high protein content and bland taste. It is generally used in food processing in that form.

The term "soy cotyledon fiber" as used herein refers to the fibrous portion of soy cotyledons containing at least about 70% fiber (polysaccharide). Soy cotyledon fiber typically contains some minor amounts of soy protein, but may also be 100% fiber. Soy cotyledon fiber, as used herein, does not refer to, or include, soy hull fiber. To avoid confusion the term "fiber" as used herein (except in this paragraph) refers to fiber formed in the process of extruding a soy protein material, generally by protein-protein interactions, not soy cotyledon fiber. To further avoid confusion, soy cotyledon fiber will be referred to herein only as "soy cotyledon fiber" and not as "fiber." Soy cotyledon fiber is formed from soybeans by removing the hull and germ of the soybean from the cotyledon, flaking or grinding the cotyledon and removing oil from the flaked or ground cotyledon, and separating the soy cotyledon fiber from the soy material and carbohydrates of the cotyledon.

The term "comminuted meat" as used herein refers to a meat paste that is recovered from an animal carcass. The meat, on or off the bone is forced through a deboning device such that meat is separated from the bone and reduced in size. The meat is separated from the meat/bone mixture by forcing through a cylinder with small diameter holes. The meat acts as a liquid and is forced through the holes while the remaining bone material remains behind. The fat content of the comminuted meat may be adjusted upward by the addition of animal fat.

### The Soy Protein Material

Component (A) is a soy protein material wherein the soy protein material (A) is selected from the group consisting of a soy protein isolate, a soy protein concentrate, a soy protein flour, and mixtures thereof. The soy protein material (A) further comprises a starch, wheat gluten and soy cotyledon fiber.

The soy protein material is produced by extruding one or more of the soy protein isolate, soy protein concentrate and soy protein flour with starch, wheat gluten and soy cotyledon fiber. The soy protein material (A) has a moisture content of from about 5% to about 80%. Moisture conditions employed in producing the soy protein material (A) are low moisture soy protein material (A) (about 5% to about 35%) and high moisture soy protein material (A) (about 50% to about 80%). In producing a soy protein material (A), the above ingredients are heated along with water under increasing temperature, pressure and shear conditions in a cooker extruder, and extruding the ingredient mixture through a die. Upon extrusion, the extrudate generally expands to form a fibrous cellular structure as it enters a medium of reduced pressure (usually atmospheric). Extrusion methods for forming fibrous cellular structures are well known and disclosed, for example, in US Patent No. 4,099,455.

The soy protein content of the soy protein material (A), irrespective of being a low moisture soy protein material (A) or a high moisture soy protein material (A) is from about 30% to about 90% by weight on a moisture free basis. For a low moisture soy protein material (A), the soy protein content, including the moisture, is from about 50% to about 75% by weight. For a high moisture soy protein material (A), the soy protein content, including the moisture, is from about 25% to about 50% by weight.

Furthermore, when a soy protein isolate is used, the soy protein isolate should not be a highly hydrolyzed soy protein isolate having a low molecular weight distribution since highly hydrolyzed soy protein isolates lack the protein chain length to properly form protein fibers in the process. Highly hydrolyzed soy protein isolates, however, may be used in combination with other soy protein isolates provided that the highly hydrolyzed soy protein isolate content of the combined soy protein isolates is less than about 40% of the combined soy protein isolates, by weight.

The soy protein isolate utilized should have a water holding capacity sufficient to enable the protein in the isolate to form fibers upon extrusion. Examples of soy protein isolates that are useful in the present invention are commercially available, for example, from Solae, LLC (St. Louis, Missouri), and include SUPRO^{®} 500E, SUPRO^{®} EX 33, SUPRO^{®} 620, SUPRO^{®} 630 and SUPRO^{®} 545.

Soy protein isolates useful in the soy protein material (A) may be produced from soybeans according to conventional processes in the soy protein manufacturing industry. Exemplary of such a process, whole soybeans are initially detrashed, cracked, dehulled, degermed, and defatted according to conventional processes to form soy flakes, soy flour, soy grits, or soy meal. The soybeans may be detrashed by passing the soybeans through a magnetic separator to remove iron, steel, and other magnetically susceptible objects, followed by shaking the soybeans on progressively smaller meshed screens to remove soil residues, pods, stems, weed seeds, undersized beans, and other trash. The detrashed soybeans may be cracked by passing the soybeans through cracking rolls. Cracking rolls are spiral-cut corrugated cylinders which loosen the hull as the soybeans pass through the rolls and crack the soybean material into several pieces. The cracked soybeans may then be dehulled by aspiration. The dehulled soybeans are degermed by shaking the dehulled soybeans on a screen of sufficiently small mesh size to remove the small sized germ and retain the larger cotyledons of the beans. The cotyledons are then flaked by passing the cotyledons through a flaking roll. The flaked cotyledons are defatted by extracting oil from the flakes by mechanically expelling the oil from the flakes or by contacting the flakes with hexane or other suitable lipophilic/hydrophobic solvent. The edible defatted flakes are then milled, usually in an open-loop grinding system, by a hammer mill, classifier mill, roller mill or impact pin mill first into grits, and with additional grinding, to form a soy meal, or a soy flour, with desired particle sizes. Screening is typically used to size the product to uniform particle size ranges, and can be accomplished with shaker screens or cylindrical centrifugal screeners.

The defatted soy flakes, soy flour, soy grits, or soy meal is/are then extracted with an aqueous alkaline solution, typically a dilute aqueous sodium hydroxide solution having a pH of from 7.5 to 11.0, to extract protein soluble in an aqueous alkaline solution from insolubles. The insolubles are soy cotyledon fiber which is composed primarily of insoluble carbohydrates. An aqueous alkaline extract containing the soluble protein is subsequently separated from the insolubles, and the extract is then treated with an acid to lower the pH of the extract to around the isoelectric point of the soy protein, preferably to a pH of from 4.0 to 5.0, and most preferably to a pH of from 4.4 to 4.6. The soy protein precipitates from the acidified extract due to the protein's lack of solubility in an aqueous solution at or near its isoelectric point. The precipitated protein curd is then separated from the remaining extract (whey). Water is added to the precipitated protein curd and the pH of the curd is adjusted to between about 6.5 and about 7.5. The separated protein may be washed with water to remove residual soluble carbohydrates and ash from the protein material. The separated protein is then dried using conventional drying means such as spray drying or tunnel drying to form a soy protein isolate.

Soy protein concentrate may be blended with the soy protein isolate to substitute for a portion of the soy protein isolate as a source of soy protein. Preferably, if a soy protein concentrate is substituted for a portion of the soy protein isolate, the soy protein concentrate is substituted for up to about 40% of the soy protein isolate by weight, at most, and more preferably is substituted for up to about 30% of the soy protein isolate by weight.

Soy protein concentrates useful in the soy protein material (A) are commercially available. For example, soy protein concentrates Promine DSPC, Procon, Alpha 12 and Alpha 5800 are available from Solae^{®}, LLC (St. Louis, Missouri). Soy protein concentrates useful in the present invention may also be produced from soybeans according to conventional processes in the soy protein manufacturing industry. For example, defatted soy flakes, soy flour, soy grits, or soy meal produced as described above may be washed with aqueous ethanol (preferably about 60% to about 80% aqueous ethanol) to remove soluble carbohydrates from the soy protein and soy fiber. The soy protein and soy fiber containing material is subsequently dried to produce the soy protein concentrate. Alternatively, the defatted soy flakes, soy flour, soy grits, or soy meal may be washed with an aqueous acidic wash having a pH of from about 4.3 to about 4.8 to remove soluble carbohydrates from the soy protein and soy fiber. After removing the soluble carbohydrates, water is added and the pH is adjusted to between about 6.5 and about 7.5. The soy protein and soy fiber containing material is subsequently dried to produce the soy protein concentrate.

The soy cotyledon fiber utilized in the soy protein material (A) should effectively bind water when the mixture of soy protein and soy cotyledon fiber are coextruded. By binding water, the soy cotyledon fiber induces a viscosity gradient across the extrudate as the extrudate is extruded through a cooling die, thereby promoting the formation of protein fibers. To effectively bind water for the purposes of the process of the present invention, the soy cotyledon fiber should have a water holding capacity of at least 5.50 grams of water per gram of soy cotyledon fiber, and preferably the soy cotyledon fiber has a water holding capacity of at least about 6.0 grams of water per gram of soy cotyledon fiber. It is also preferable that the soy cotyledon fiber has a water holding capacity of at most about 8.0 grams of water per gram of soy cotyledon fiber.

The soy cotyledon fiber is a complex carbohydrate and is commercially available. For example, FIBRIM^{®} 1260 and FIBRIM^{®} 2000 are soy cotyledon fiber materials that are commercially available from Solae, LLC (St. Louis, Missouri) that work well in the process of the present invention. Soy cotyledon fiber useful in the process of the present invention may also be produced according to conventional processes in the soy processing industry. For example, defatted soy flakes, soy flour, soy grits, or soy meal produced as described above may be extracted with an aqueous alkaline solution as described above with respect to the production of a soy protein isolate to separate the insoluble soy cotyledon fiber from the aqueous alkaline soluble soy protein and carbohydrates. The separated soy cotyledon fiber is then dried, preferably by spray drying, to produce a soy cotyledon fiber product. Soy cotyledon fiber is generally present in the soy protein material (A) at from about 1% to about 20%, preferably at from about 1.5% to about 20% and most preferably at from about 2% to about 5% by weight on a moisture free basis.

A modest concentration of soy fiber is believed to be effective in obstructing cross-linking of protein molecules, thus preventing excessive gel strength from developing in the cooked extrusion mass exiting the die. Unlike the protein, which also absorbs moisture, soy fiber readily releases moisture upon release of pressure at the die exit temperature.

Wheat gluten may be used as an ingredient to be mixed and extruded with the soy protein and soy cotyledon fiber. Wheat gluten provides an economical source of protein, and may be substituted for a portion of the soy protein. The protein of wheat gluten has a very low water holding capacity and is ineffective to form significant protein fibers by itself upon extrusion. Wheat gluten is a commercially available ingredient. A preferred commercially available wheat gluten useful in the present invention is Gem of the Star Gluten, available from Manildra Milling.

A starch material is also used as an ingredient to be mixed and extruded within the soy protein material (A). Starch is used to provide texture to the soy protein material (A) that is produced by extrusion. The starch material used is preferably a naturally occurring starch. The starch material may be isolated from a variety of plants such as corn, wheat, potato, rice, arrowroot, and cassava by well-known, conventional methods. Starch materials useful in the process of the present invention include the following commercially available starches: corn, wheat, potato, rice, high amylose corn, waxy maize, arrowroot, and tapioca. Preferably the starch material used is a corn starch or a wheat starch, and most preferably is a commercially available dent corn starch or native wheat starch. A preferred dent corn starch is commercially available from A. E. Staley Mfg., Co. sold as Dent Corn Starch, Type IV, Pearl.

Preferably, flavor ingredients are also mixed and extruded with the soy protein material (A). The preferred flavor ingredients are those that provide a meat-like flavor to the soy protein material produced by extrusion. Preferred flavor ingredients include beef flavor, chicken flavor, grill flavor, and malt extract, all commercially available from flavor ingredient manufacturers.

The restructured meat product may also include one or more optional constituents such as an antioxidant, or an antimicrobial agent. Antioxidant additives include BHA, BHT, TBHQ, vitamins A, C and E and derivatives, and various plant extracts such as those containing carotenoids, tocopherols or flavonoids having antioxidant properties, may be included to increase the shelf-life of the restructured meat product.

Antimicrobial agents include sodium lactate, potassium lactate, sodium diacetate and potassium diacetate.

The antioxidants and the antimicrobial agents may have a combined presence at levels of from about 0.01% to about 10%, preferably from about 0.05% to about 5%, and more preferably from about 0.1% to about 2%, by weight of the restructured meat product.

A suitable extrusion process for the preparation of a low moisture soy protein material (A) comprises introducing the particular ingredients that comprise Component (A) into a mixing tank (i.e., an ingredient blender) to combine the ingredients and form a dry blended soy protein material pre-mix. The dry blended soy protein material pre-mix is then transferred to a hopper from which the dry blended ingredients are introduced along with moisture into a pre-conditioner to form a conditioned soy protein material mixture. The conditioned soy protein material is then fed to an extrusion apparatus (i.e., extruder) in which the soy protein material mixture is heated under mechanical pressure generated by the screws of the extruder to form a molten extrusion mass. The molten extrusion mass exits the extruder through an extrusion die.

In the pre-conditioner, the particulate solid ingredient mix is preheated, contacted with moisture, and held under controlled temperature and pressure conditions to allow the moisture to penetrate and soften the individual particles. The preconditioning step increases the bulk density of the particulate fibrous material mixture and improves its flow characteristics. The preconditioner contains one or more paddles to promote uniform mixing of the protein and transfer of the protein mixture through the preconditioner. The configuration and rotational speed of the paddles vary widely, depending on the capacity of the preconditioner, the extruder throughput and/or the desired residence time of the fibrous material mixture in the preconditioner or extruder barrel. Generally, the speed of the paddles is from about 500 to about 1300 revolutions per minute (rpm).

Typically, the soy protein material mixture is pre-conditioned prior to introduction into the extrusion apparatus by contacting the pre-mix with moisture (i.e., steam and/or water) at a temperature of at least about 45°C (110°F). It has been observed, however, that higher temperatures (i.e., temperatures above about 85°C (185°F)) in the preconditioner may encourage starches to gelatinize, which in turn may cause lumps to form, which may impede flow of the protein mixture from the preconditioner to the extruder barrel.

Typically, the soy protein material pre-mix is conditioned for a period of about 30 to about 60 seconds, depending on the speed and the size of the conditioner. The soy protein material (A) pre-mix is contacted with steam and/or water and heated in the pre-conditioner at generally constant steam flow to achieve the desired temperatures. The water and/or steam conditions (i.e., hydrates) the soy protein material mixture, increases its density, and facilitates the flowability of the dried mix without interference prior to introduction to the extruder barrel where the proteins are texturized.

The conditioned pre-mix may contain from about 5% to about 30% (by weight) water. The conditioned pre-mix typically has a bulk density of from about 0.25 g/cm³ to about 0.6 g/cm³. Generally, as the bulk density of the pre-conditioned protein mixture increases within this range, the protein mixture is easier to process. This is presently believed to be due to such mixtures occupying all or a majority of the space between the screws of the extruder, thereby facilitating conveying the extrusion mass through the barrel.

The conditioned pre-mix is generally introduced to the extrusion apparatus at a rate of no more than about 10 kilograms (kg)/min (no more than about 20 lbs/min). Generally, it has been observed that the density of the extrudate decreases as the protein rate of pre-mix to the extruder increases.

Extrusion devices have long been used in the manufacture of a wide variety of edible products. One suitable extrusion device is a double-barrel, twin screw extruder as described, for example, in U.S. Patent No. 4,600,311. Examples of commercially available double-barrel, twin screw extrusion apparatus include a CLEXTRAL Model BC-72 extruder manufactured by Clextral, Inc. (Tampa, FL); a WENGER Model TX-57 extruder manufactured by Wenger (Sabetha, KS); and a WENGER Model TX-52 extruder manufactured by Wenger (Sabetha, KS). Other conventional extruders suitable for use in this invention are described, for example, in U.S. Patent Nos. 4,763,569, 4,118,164, and 3,117,006.

The screws of a twin screw extruder can rotate within the barrel in the same or opposite directions. Rotation of the screws in the same direction is referred to as single flow whereas rotation of the screws in opposite directions is referred to as double flow. The speed of the screw or screws of the extruder may vary depending on the particular apparatus. However, the screw speed is typically from about 250 to about 350 revolutions per minute (rpm). Generally, as the screw speed increases, the density of the extrudate decreases.

The extrusion apparatus generally comprises a plurality of heating zones through which the protein mixture is conveyed under mechanical pressure prior to exiting the extrusion apparatus through an extrusion die. The temperature in each successive heating zone generally exceeds the temperature of the previous heating zone by between about 10°C and about 70°C (between about 15°F and about 125°F). In one embodiment, the conditioned pre-mix is transferred through four heating zones within the extrusion apparatus, with the protein mixture heated to a temperature of from about 100°C to about 150°C (from about 212°F to about 302°F) such that the molten extrusion mass enters the extrusion die at a temperature of from about 100°C to about 150°C (from about 212°F to about 302°F).

The pressure within the extruder barrel is not narrowly critical. Typically the extrusion mass is subjected to a pressure of at least about 400 psig (about 28 bar) and generally the pressure within the last two heating zones is from about 1000 psig to about 3000 psig (from about 70 bar to about 210 bar). The barrel pressure is dependent on numerous factors including, for example, the extruder screw speed, feed rate of the mixture to the barrel, feed rate of water to the barrel, and the viscosity of the molten mass within the barrel.

Water is injected into the extruder barrel to hydrate the soy protein material mixture and promote texturization of the proteins. As an aid in forming the molten extrusion mass the water may act as a plasticizing agent. Water may be introduced to the extruder barrel via one or more injection jets in communication with a heating zone. Typically, the mixture in the barrel contains from about 15% to about 30% by weight water. The rate of introduction of water to any of the heating zones is generally controlled to promote production of an extrudate having desired characteristics. It has been observed that as the rate of introduction of water to the barrel decreases, the density of the extrudate decreases. Typically, less than about 1 kg of water per kg of protein is introduced to the barrel. Generally, from about 0.1 kg to about 1 kg of water per kg of protein are introduced to the barrel.

The molten extrusion mass in the extrusion apparatus is extruded through a die to produce an extrudate, which may then dried in a dryer.

Extrusion conditions are generally such that the product emerging from the extruder barrel typically has a moisture content of from about 20% to about 45% (by weight) wet basis. The moisture content is derived from water present in the mixture introduced to the extruder, moisture added during preconditioning and/or any water injected into the extruder barrel during processing.

Upon release of pressure, the molten extrusion mass exits the extruder barrel through the die, superheated water present in the mass flashes off as steam, causing simultaneous expansion (i.e., puffing) of the material. The level of expansion of the extrudate upon exiting of the mixture from the extruder in terms of the ratio of the cross-sectional area of extrudate to the cross-sectional area of die openings is generally less than about 15:1. Typically, the ratio of the cross-sectional area of extrudate to the cross-sectional area of die openings is from about 2:1 to about 11:1.

The extrudate is cut after exiting the die. Suitable apparatus for cutting the extrudate include flexible knives manufactured by Wenger (Sabetha, KS) and Clextral (Tampa, FL).

The dryer, if one is used for the low moisture soy protein material (A), to dry the extrudates generally comprises a plurality of drying zones in which the air temperature may vary. Generally, the temperature of the air within one or more of the zones will be from about 135°C to about 185°C (from about 280°F to about 370°F). Typically, the extrudate is present in the dryer for a time sufficient to provide an extrudate having a desired moisture content. This desired moisture content may vary widely depending on the intended application of the extrudate and, typically, is from about 5% to about 35% by weight, more preferably from about 6% to about 13% by weight. Generally, the extrudate is dried for at least about 5 minutes and, more generally, for at least about 10 minutes. Suitable dryers include those manufactured by Wolverine Proctor & Schwartz (Merrimac, MA), National Drying Machinery Co. (Philadelphia, PA), Wenger (Sabetha, KS), Clextral (Tampa, FL), and Buehler (Lake Bluff, IL).

The dried extrudates may further be comminuted to reduce the average particle size of the extrudate. Suitable grinding apparatus include hammer mills such as Mikro Hammer Mills manufactured by Hosokawa Micron Ltd. (England).

Prior to combining the low moisture soy protein material (A) with the comminuted meat (B), the soy protein material (A) having a moisture content of from about 6% to about 13% by weight, if dried, needs to be hydrated in water until the water is absorbed and the fibers are separated. If the soy protein material (A) is not dried or not fully dried, its moisture content is higher, generally from about 16% to about 30% by weight, on a moisture free basis. The non-dried or not fully dried soy protein material (A) needs to be hydrated prior to combining with the comminuted meat. However, when a non-dried or not fully dried soy protein material (A) is used, less water is necessary for hydrating the soy protein material (A) and hydration of the soy protein material (A) occurs much faster.

The ingredients employed to make a low moisture soy protein material (A) of from about 5% to about 35% moisture by weight, are also used to make a high moisture soy protein material (A) of from about 50% to about 80% moisture by weight. The soy protein, soy cotyledon fiber and other ingredients are dry blended and mixed in a mixing tank to combine the ingredients and form a dry blended soy protein material pre-mix. Alternatively, the soy protein, soy cotyledon fiber and other ingredients may be mixed directly with water to form a dough, without being dry blended first, preferably in a preconditioner.

Preferably the dough mixture including the dry ingredients and the water is conditioned for extrusion in the preconditioner by heating the dough mixture. Preferably the dough mixture is heated to a temperature of from about 50°C to about 80°C, more preferably from about 60°C to about 75°C in the preconditioner.

The dough mixture is then fed into a cooking extruder to heat, shear, and, ultimately, to plasticize the dough mixture. The cooking extruder may be selected from commercially available cooking extruders. Preferably the cooking extruder is a single screw extruder, or more preferably a twin screw extruder, that mechanically shears the dough with the screw elements. Commercially available cooking extruders useful in the practice of the present invention include Clextral extruders, commercially available from Clextral, Inc., Tampa, Florida; Wenger extruders, commercially available from Wenger, Inc, Sabetha, Kansas; and Evolum extruders, commercially available from Clextral, Inc. A particularly preferred cooking extruder for the practice of the present invention is a Clextral BC72 cooking extruder, available from Clextal, Inc. Another preferred cooking extruder for the practice of the present invention is an EV32 twin screw extruder from Evolum.

The dough mixture is subjected to shear and pressure by the cooking extruder to plasticize the dough mixture. The screw elements of the cooking extruder shear the dough mixture as well as create pressure in the extruder by forcing the dough mixture forward though the extruder and through the die. The screw motor speed determines the amount of shear and pressure applied to the dough mixture by the screw(s). Preferably the screw motor speed is set to a speed of from about 200 rpm to about 500 rpm, and more preferably from about 300 rpm to about 400 rpm, which moves the dough mixture through the extruder at a rate of at least about 20 kilograms per hour, and more preferably at least about 40 kilograms per hour. Preferably the cooking extruder generates an extruder barrel exit pressure of from about 500 to about 1500 psig, and more preferably an extruder barrel exit pressure of from about 600 to about 1000 psig is generated.

The dough mixture is heated by the cooking extruder as it passes through the extruder. Heating denatures the protein in the dough mixture enabling the dough mixture to plasticize. The cooking extruder includes a means for heating the dough mixture to temperatures of from about 100°C to about 180°C. Preferably the means for heating the dough mixture in the cooking extruder comprises extruder barrel jackets into which heating or cooling media such as steam or water may be introduced to control the temperature of the dough mixture passing through the extruder. The cooking extruder may also include steam injection ports for directly injecting steam into the dough mixture within the extruder. The cooking extruder preferably includes multiple heating zones that can be controlled to independent temperatures, where the temperatures of the heating zones are preferably set to increase the temperature of the dough mixture as the dough mixture proceeds through the extruder. For example, the cooking extruder may be set in a four temperature zone arrangement, where the first zone (adjacent the extruder inlet port) is set to a temperature of from about 80°C to about 100°C, the second zone is set to a temperature of from about 100°C to 135°C, the third zone is set to a temperature of from 135°C to about 150°C, and the fourth zone (adjacent the extruder exit port) is set to a temperature of from 150°C to 180°C. The cooking extruder may be set in other temperature zone arrangements, as desired. For example, the cooking extruder may be set in a five temperature zone arrangement, where the first zone is set to a temperature of about 25°C, the second zone is set to a temperature of about 50°C, the third zone is set to a temperature of about 95°C, the fourth zone is set to a temperature of about 130°C, and the fifth zone is set to a temperature of about 150°C.

A long cooling die is attached to the cooking extruder so the plasticized dough mixture flows from the extruder through the cooling die upon exiting the extruder exit port. The dough mixture forms a melted plasticized mass in the cooking extruder that flows from the cooking extruder into the die. The cooling die cools and shapes the hot dough mixture as it exits cooking extruder. Fiber formation is induced in the plasticized dough mixture by the cooling effect of the cooling die to form the fibrous meat analog product. The fibrous material exits the cooling die through at least one aperture in the die face, which may be a die plate affixed to the die. The fibrous material extrudate is cut into desired lengths with a cutting knife positioned adjacent the die aperture(s) to cut the extrudate as it exits the die aperture(s).

The cooling die is maintained at a temperature significantly cooler than the temperature in the cooking extruder in the final temperature zone of the extruder adjacent the die. The cooling die includes means for maintaining the temperature at a temperature significantly cooler than the exit temperature of the cooking extruder. Preferably the cooling die includes inlet and outlet ports for circulating media for maintaining the die temperature. Most preferably, constant temperature water is circulated through the cooling die as the circulating media for maintaining the desired die temperature. Preferably, the cooling die is maintained at a temperature of from about 80°C to about 110°C, more preferably the cooling die is maintained at a temperature of from about 85°C to about 105°C, and most preferably the cooling die is maintained at a temperature of from about 90°C to about 100°C.

The cooling die is preferably a long cooling die to ensure that the plasticized dough material is cooled sufficiently in transit through the die to induce proper fiber formation. In a preferred embodiment, the die is at least about 200 millimeters long, and more preferably is at least about 500 millimeters long. Long cooling dies useful in the practice of the process of the present invention are commercially available, for example from Clextral, Inc., E. I. duPont de Nemours and Company, and Kobe Steel, Ltd.

The width and height dimensions of the cooling die aperture(s) are selected and set prior to extrusion of the dough mixture to provide the fibrous material extrudate with the desired dimensions. The width of the die aperture(s) may be set so that the extrudate resembles from a cubic chunk of meat to a steak filet, where widening the width of the die aperture(s) decreases the cubic chunk-like nature of the extrudate and increases the filet-like nature of the extrudate. Preferably the width of the cooling die aperture(s) is/are set to a width of from about 10 millimeters to about 40 millimeters, and most preferably from about 25 millimeters to about 30 millimeters.

The height dimension of the cooling die aperture(s) may be set to provide the desired thickness of the extrudate. The height of the aperture(s) may be set to provide a very thin extrudate or a thick extrudate. A novel feature of the present invention is that the height of the aperture(s) may be set to at least about 12 millimeters, and the resulting extrudate is fibrous across the entirety of any cross-section of the extrudate. Prior to the present invention, high moisture extrudates having a thickness of at least about 12 millimeters (as determined by the height of the cooling die aperture(s)) gelled in the center of the extrudate, and were not fibrous across the entirety of a transverse cross-section of the extrudate. Preferably, the height of the cooling die aperture(s) may be set to from about 1 millimeter to about 30 millimeters, and more preferably from about 12 millimeters to about 25 millimeters, and most preferably from about 15 millimeters to 20 about millimeters.

Due to the high moisture content of the dough mixture, little dissipation of energy and expansion occurs in the soy protein material (A) extrudate as it exits the die aperture(s). As a result, the soy protein material (A) is relatively dense compared to a low moisture extrudate, since few air vacuoles are introduced into the soy protein material (A) extrudate by expansion of the extrudate upon extrusion from the die.

One example of a soy protein material (A) containing soy protein and soy cotyledon fiber for use in the restructured meat product described herein is FXP MO339, available from The Solae Co. (St. Louis, MO). FXP MO339 is an extruded dry textured soy protein product with suitable fibrosity and texture, and a suitable amount of soy protein. Specifically, FXP MO339 comprises 56.2% by weight soy protein, 1.9% by weight of fiber, 24.7% by weight of wheat gluten, 9.6% by weight of starch, 1.9% L-cysteine, 0.5% dicalcium phosphate and 5.2% by weight moisture. Another example of a soy protein material (A) containing soy protein and soy cotyledon fiber for use in the restructured meat product described herein is VETEX 1000, available from Stentorian Industries Company Limited (Taiwan).

### (B) The Comminuted Meat

It is well known in the art to produce mechanically deboned or separated raw meats using high-pressure machinery that separates bone from animal tissue, by first crushing bone and adhering animal tissue and then forcing the animal tissue, and not the bone, through a sieve or similar screening device. The animal tissue in the present invention comprises muscle tissue, organ tissue, connective tissue and skin. The process forms an untexturized, paste-like blend of soft animal tissue with a batter-like consistency and is commonly referred to as mechanically deboned meat or MDM. This past-like blend has a particle size of from about 0.25 to about 10 millimeters, preferably up to about 5 millimeters and most preferably up to about 3 millimeters.

Although the animal tissue, also known as raw meat, is preferably provided in at least substantially frozen form so as to avoid microbial spoilage prior to processing, once the meat is ground, it is not necessary to freeze it to provide cuttability into individual strips or pieces. Unlike meat meal, raw meat has a natural high moisture content of above about 50% and the protein is not denatured.

The raw meat used in the present invention may be any edible meat suitable for human consumption. The meat may be non-rendered, non-dried, raw meat, raw meat products, raw meat by-products, and mixtures thereof. The meat or meat products are comminuted and generally supplied daily in a completely frozen or at least substantially frozen condition so as to avoid microbial spoilage. Generally the temperature of the comminuted meat is below about 40°C, preferably below about 10°C more preferably is from about -4°C to about 6°C and most preferably from about -2°C to about 2°C. While refrigerated or chilled meat may be used, it is generally impractical to store large quantities of unfrozen meat for extended periods of time at a plant site. The frozen products provide a longer lay time than do the refrigerated or chilled products. Beef, pork, chicken, and turkey are preferred meat products intended for human consumption. Specific examples of animal food products which may be used in the process of the present invention include pork shoulder, beef shoulder, beef flank, turkey thigh, beef liver, ox heart, pigs heart, pork heads, pork skirt, beef mechanically deboned meat, pork mechanically deboned meat and chicken mechanically deboned meat. Mechanically deboned beef, mechanically deboned pork and mechanically deboned chicken are preferred.

In lieu of frozen comminuted meat, the comminuted meat may be freshly prepared for the preparation of the restructured meat product, as long as the freshly prepared comminuted meat meets the temperature conditions of not more than about 40°C.

The moisture content of the raw frozen or unfrozen meat is generally at least about 50% by weight, and most often from about 60% by weight to about 75% by weight, based upon the weight of the raw meat. In embodiments of the invention, the fat content of the raw frozen or unfrozen meat may be at least 2% by weight, generally from about 15% by weight to about 30% by weight. In other embodiments of the invention, meat products having a fat content of less than about 10% by weight and defatted meat products may be used.

The frozen or chilled meat may be stored at a temperature of about -18°C to about 0°C. It is generally supplied in 20 kilogram blocks. Upon use, the blocks are permitted to thaw up to about 10°C, that is, to defrost, but in a tempered environment. Thus, the outer layer of the blocks, for example up to a depth of about 1/4" (0,64 cm), may be defrosted or thawed but still at a temperature of about 0°C, while the remaining inner portion of the blocks, while still frozen, are continuing to thaw and thus keeping the outer portion at below about 10°C.

The term "meat" is understood to apply not only to the flesh of cattle, swine, sheep and goats, but also horses, whales and other mammals, poultry and fish. The term "meat by-products" is intended to refer to those non-rendered parts of the carcass of slaughtered animals including but not restricted to mammals, poultry and the like and including such constituents as are embraced by the term "meat by-products" in the Definitions of Feed Ingredients published by the Association of American Feed Control Officials, Incorporated. The terms "meat," and "meat by-products," are understood to apply to all of those animal, poultry and marine products defined by said association.

Examples of meat which may be used are mammalian meat such as beef, veal, pork, and horsemeat, and the fleshy tissue from bison, cows, deer, elk, and the like. Poultry meat which may be used includes chicken, turkey, duck, or goose and the like. Embodiments of the invention may also utilize the flesh of fish and shell fish. Meat includes striated muscle which is skeletal or that which is found, for example, in the tongue, diaphragm, heart, or esophagus, with or without accompanying overlying fat and portions of the skin, sinew, nerve and blood vessels which normally accompany the meat flesh. Examples of meat by-products are organs and tissues such as lungs, spleens, kidneys, brain, liver, blood, bone, partially defatted low-temperature fatty tissues, stomachs, intestines free of their contents, and the like. Poultry by-products include non rendered clean parts of carcasses of slaughtered poultry such as heads, feet, and viscera, free from fecal content and foreign matter.

### Water

Employed as water (C), is tap water, distilled water or deionized water. The purpose of the water is to hydrate the ingredients of soy protein, soy cotyledon fiber, wheat gluten and starch contained within the soy protein material (A) such that these ingredients absorb the water and that the soy cotyledon fibers contained within the soy protein material (A) become separated. Typically, the ratio of soy protein material (A) on a moisture free basis to the hydration water is from about 1:0.5 to about 10, preferably from about 1:1 to about 7 and most preferably from about 1:2 to about 5. More water for hydration is employed when a low moisture soy protein material (A) is utilized in the restructured meat product. Less water for hydration is employed when a high moisture soy protein material (A) is utilized in the restructured meat product. The temperature of the water may range from 0°C up to about 30°C. Hydration time may be from about 30 minutes up to several hours, depending upon the moisture content of the soy protein material (A), the amount of water utilized and the temperature of the water.

The restructured meat product is prepared by a process according to claim 7.

Prior to hydration of the at least one of a soy protein isolate, soy protein concentrate and a soy protein flour, the weight ratio of soy protein material (A) on a moisture free basis to the comminuted meat (B) on a moisture free basis is generally from about 1:0.25 to about 50, preferably from about 1:1 to about 40 and most preferably from about 1:2 to about 20. The hydrated soy protein material (A) and the comminuted meat (B) are combined in a mixing device and mixed to give a homogeneous restructured meat product.

The product and process of this invention are completed by combining Components (A), (B) and (C) as per the disclosed ratios of (A):(B) and (A):(C). The soy protein material (A) is first hydrated with water (C). When hydration is complete, the comminuted meat (B) is added and the contents are mixed until a homogeneous mass of a restructured meat product is obtained. At this point, the homogeneous restructured meat product may be formed into strips, steaks, cutlets, patties, ground or generally cube-shaped for kabobs, either by hand or by machine. The homogenous restructured meat product may also be stuffed into permeable or impermeable casings.

The restructured meat product may also further comprise at least one of a gelling protein; an animal fat; sodium chloride; sodium tripolyphosphate; a colorant; a curing agent; a flavorant comprising beef flavor, pork flavor, or chicken flavor; or mixtures of each with the other.

The gelling protein is selected from the group consisting of a soy protein flour, a soy protein isolate and a soy protein concentrate. These are the same soy proteins that are utilized in the preparation of the soy protein material (A). The soy protein isolate useful as a gelling protein is a high viscosity and/or medium/high gelling isolated soy protein. The gelling protein provides a gelling matrix within the restructured meat product. Suitable sources of high viscosity and/or medium/high gelling isolated soy protein (i.e., unhydrolyzed) for use as the gelling protein includes SUPRO^{®} 620, SUPRO^{®} 500E, SUPRO^{®} 630, and SUPRO^{®} EX33 available from The Solae Company (St. Louis, MO); PROFAM 981 available from Archer Daniels Midland (Decatur, IL); and PROLISSE soy protein isolate available from Cargill Soy Protein Solutions, Inc. (Minneapolis, MN). The gelling protein is present at from about 2% to about 10% by weight, on a moisture free basis.

Animal fats are triglycerides with a highly saturated character. Typically animal fats are solids or waxy in nature at room temperature. The purpose of animal fats is to function as a gelling agent in the restructured meat product in the uncooked state and as a flavoring aid in the cooked state. The animal fats are generally present at from about 1% to about 30% by weight, on a moisture free basis and preferably at from about 2% to about 10% by weight, on a moisture free basis.

The sodium chloride and sodium phosphates are salts that are mixed into the restructured meat product to extract/solubilize myfibriller protein in the comminuted meat. These salts, used singly or in combination, in addition to being flavor enhancers, also help to bind the comminuted meat within the restructured meat product. These salts are generally present at from about 0.1% to about 4.0% by weight, on a moisture free basis and at from about 0.1% to about 1.0% by weight, on a moisture free basis, respectively. Preferably these salts are present at from about 0.5% to about 2.0% by weight, on a moisture free basis and at from about 0.2% to about 0.5% by weight, on a moisture free basis, respectively.

Colorants provide eye appeal to the restructured meat product. Colorants provide a red color to the restructured meat product in the uncooked state, as well as a brown color in the cooked state. Examples of colorants are edible colorings such as caramel color, paprika, cinnamon and FD & C (Food, Drug and Cosmetic) Red No. 3 (A.K.A. Food Red 14 and Erythrosine BS), FD & C Yellow No. 5 (A.K.A. Food Yellow 4 and Tartrazine), FD & C Yellow No. 6 (A.K.A. Food Yellow 3 and Sunset Yellow FCF), FD & C Green No. 3 (A.K.A. Food Green 3 and Fast Green FCF), FD & C Blue No. 2 (A.K.A. Food Blue 1 and Indigo Carmine), FD & C Blue No. 1 (A.K.A. Food Blue 2 and Brilliant Blue FCF), and FD & C Violet No. 1 (A.K.A. Food Violet 2 and Violet B6), as well as sodium nitrite, the latter of which also functions as a curing agent. Preferred is caramel, which can come in various color ranges.

By caramel it is meant an amorphous, dark brown, deliquescent powder or a thick liquid having a bitter taste, a burnt sugar odor and a specific gravity of approximately 1.35. It is soluble in water and dilute alcohol. Caramel is prepared by the careful, controlled heat treatment of carbohydrate or saccharide materials such as dextrose, invert sugar, lactose, malt syrup, molasses, sucrose, starch hydrolysates and fractions thereof. Other materials which may be employed during heat treatment to assist caramelization include acids (e.g. acetic acid, citric acid, phosphoric acid, sulfuric acid and sulfurous acid); and salts (e.g. ammonium, sodium or potassium carbonates, bicarbonates, dibasic phosphates or mono-basic phosphates).

In one process of manufacturing caramel described in U.S. Pat. No. 3,733,405, a liquid sugar, either cane or corn, is pumped into a reactor vessel along with one or a combination of the reagents authorized by the U.S. Food and Drug Administration and the mixture is heated. Temperatures ranging from about 250°C to about 500°C are maintained and the product is held between about 15 and about 250 pounds per square inch pressure (psi) while the polymerization takes place. When processing is completed the product is discharged to a flash cooler which drops the temperature to about 150°F (66°C). It is then filtered, cooled and pumped to storage.

It is preferred that the colorant be present in the restructured meat product in the range of between about 0.1% to about 2%, preferably in the range of from about 0.2% to about 1% and most preferably in the range of from about 0.25% to about 0.75% by weight of the restructured meat product when a liquid is used.

Even though the restructured meat product is derived from a meat source, it is advantageous to add a flavorant to the restructured meat product to enhance its aroma and taste. The flavorants comprise beef flavor, pork flavor or chicken flavor. A beef flavor is preferred. The flavorants are generally present at from about 0.1% to about 5.0% by weight, on a moisture free basis and preferably at from about 0.5% to about 3.0% by weight, on a moisture free basis.

When the restructured meat product further comprises at least one of a gelling protein; an animal fat; sodium chloride; sodium tripolyphosphate; a colorant; a curing agent; a flavorant comprising beef flavor, pork flavor, or chicken flavor; or mixtures of each with the other the product and process are completed in a procedure similar to the product and process of only the (A), (B) and (C) components. The soy protein material (A) is first hydrated with water (C). When hydration is complete, a colorant is added. The comminuted meat (B) and water (C) is added and the contents are mixed until a homogeneous mass is obtained. This is followed by the addition of an animal fat, a flavorant, sodium chloride, and sodium tripolyphosphate, and the gelling protein . The homogeneous restructured meat product may be formed into strips, steaks, cutlets, patties, ground or generally cube-shaped for kabobs, either by hand or by machine. The homogenous restructured meat product may also be stuffed into permeable or impermeable casings.

The restructured meat product, either with or without a gelling protein, may be dried, e.g. as a jerky, or partially dried, e.g. as a salami. Preferably the restructured meat product has a moisture content of at least about 50% before drying. If dried or partially dried, the restructured meat product has a moisture content of from about 15 to about 45%. An example of a dried meat product is a jerky product.

The restructured meat product once formed is either cooked, partially cooked for finishing at a later time or frozen either in an uncooked state, partially cooked state or cooked state. Cooking includes frying either as sautéing or as deep frying or baking.

Jerky products of the present invention may be produced in a variety of shapes such as bone shaped, chop shaped, round, triangular, chicken bone shaped, square, rectangular, strip shaped, and the like. The different shapes may be produced simultaneously by using variously shaped molds or cavities upon a single die roll. Furthermore, the pieces may be embossed or impressed with a logo or design contained in the cavities or molds of the die roll.

The jerky products of the present invention exhibit shelf stability under unrefrigerated conditions of at least about six months, preferably at least about twelve months in proper moisture proof packaging, such as foil-lined bags.

The restructured meat product (before drying, partially dried, dried, cooked or uncooked) may be packaged as is. Further processing of the restructured meat product (before drying, partially dried, dried, cooked or uncooked) may be shock-frozen, for example in a freeze tunnel, and subsequent automatic portion packaging in containers of a suitable type, for example, plastic pouches or the like. Said type of further processing and packaging is suitable if the product is intended for fast-food outlets or for food service applications, where the product is usually deep-fried or baked before consumption.

Alternatively, after the formation of the restructured meat product (before drying, partially dried, dried, cooked or uncooked), it is also possible to spray the surface of the product with carbohydrate solutions or related substances in order to obtain uniform browning during deep frying or baking. Subsequently, the product can now be shock frozen and sold portion packed (i.e. in pouches). The restructured meat product can also be baked or processed in a convection oven by the consumer, instead of deep frying. Further, the restructured meat product also can be breaded prior to or after cooking, or coated with another type of coating.

The restructured meat product either cooked or uncooked may also be packed and sealed in cans in a conventional manner and employing conventional sealing procedures. Normally, the cans at this stage are maintained at a temperature of between 65°C and 77°C and are carried to a retort or cooking stage as quickly as possible to prevent there being any risk of microbiological spoilage during the time between canning and sterilization during the retort or cooking stage.

The invention having been generally described above, may be better understood by reference to the examples described below. The following examples represent specific but non-limiting embodiments of the present invention.

### Example 1

Added to a mixing vessel are 3625 grams of tap water at about 10°C and while stirring 1160 grams of a dried, low moisture (about 7% to about 12%) soy protein material (A) comprising a soy protein isolate, soy cotyledon fiber, wheat gluten and starch is added until the soy protein material (A) is hydrated and the fibers are separated. Added to the mixer are 5216 grams of a comminuted meat of mechanically deboned chicken having a moisture content of at least about 50%. The mechanically deboned chicken is at a temperature of from about 2 to about 4°C. The contents are mixed until a homogeneous restructured meat product is obtained. The restructured meat product is transferred to a Hollymatic forming machine where the restructured meat product is formed into steaks or cutlets which are then frozen.

### Example 2

The procedure of Example 1 is repeated, except that 1500 grams of a non-dried low moisture (about 28- about 35%) soy protein material (A) comprising a soy protein isolate, soy cotyledon fiber, wheat gluten and starch is hydrated with 3175 grams water. The restructured meat product is transferred to a stuffing machine where the restructured meat product is stuffed into impermeable casings, which are then frozen. Stuffing machines are available from various commercial manufacturers including, but not limited to, HITEC Food Equipment, Inc., located in Elk Grove Village; Ill., Townsend Engineering Co., located in Des Moines, Iowa, Robert Reiser & Co., Inc., located in Canton, Mass., and Handtmann, Inc., located in Buffalo Grove, Ill.

### Example 3

Added to a first mixing vessel are 2127 grams of tap water at about 12°C and while stirring 1000 grams of a dried, low moisture (about 7% to about 12%) soy protein material (A) comprising a soy protein isolate, soy cotyledon fiber, wheat gluten and starch is added until the soy protein material (A) is hydrated and the fibers are separated. Caramel coloring, 43 grams, is then added to the hydrated soy protein material (A). At about 2°C, 4500 grams of a comminuted meat of mechanically deboned chicken having a moisture content of about 50% is added. Then added are 100 grams sodium chloride and 30 grams of sodium trypolyphosphate to extract/solubilize myofibriller protein in the comminuted meat for binding. As mixing is continued, 500 grams beef fat and 100 grams beef flavor are added and mixing is continued. In a second mixing vessel, a gelling protein of 600 grams of Supro^{®} 620 is hydrated in 1000 grams water and is added to the first mixing vessel. The contents are mixed until a homogeneous restructured meat product is obtained. The restructured meat product is transferred to a Hollymatic forming machine where the restructured meat product is formed into patties, which are then frozen.

### Example 4 (comparative)

Added to a mixing vessel are 3000 grams of tap water at about 10°C and while stirring 1500 grams of a soy protein material (A) of Supro^{®} 620 is added until the soy protein material (A) is hydrated. Added to the mixer are 5000 grams of a comminuted meat of mechanically deboned chicken having a moisture content of about 50%. The mechanically deboned chicken is at a temperature of from about 2 to about 4°C. The contents are mixed until a homogeneous restructured meat product is obtained. The restructured meat product is transferred to a Hollymatic forming machine where the restructured meat product is formed into steaks or cutlets which are then frozen.

### Example 5 (comparative)

The procedure of Example 4 is repeated except that the soy protein material (A) comprises a soy protein isolate, rice flour, and a gluten free starch.

### Example 6 (comparative)

The procedure of Example 4 is repeated except that the soy protein material (A) comprises a soy protein isolate and rice flour.

### Example 7 (comparative)

The procedure of Example 4 is repeated except that the soy protein material (A) comprises a soy protein isolate and a gluten free starch.

### Example 8

The procedure of Example 4 is repeated except that the soy protein material (A) comprises a soy protein isolate, wheat flour and starch.

### Example 9 (comparative)

The procedure of Example 4 is repeated except that the soy protein material (A) comprises a soy protein isolate and soy cotyledon fiber.

### Example 10 (comparative)

The procedure of Example 4 is repeated except that the soy protein material (A) comprises a soy protein isolate, soy cotyledon fiber, and wheat gluten.

In summary, the application discloses the following items:
Item#1. A restructured meat product, comprising:
   (A) a soy protein material;
   (B) a comminuted meat; and
   (C) water.
Item#2. The restructured meat product of item 1 wherein the soy protein material (A) is selected from the group consisting of a soy protein flour, a soy protein isolate, a soy protein concentrate, and mixtures thereof.
Item#3. The restructured meat product of item 1 wherein the soy protein material (A) is a soy protein isolate.
Item#4. The restructured meat product of item 3 wherein (A) further comprises from about 2% to about 20% by weight on a moisture free basis of a starch and from about 2% to about 20% by weight on a moisture free basis of at least one selected from the group consisting of a wheat flour, a wheat gluten, and mixtures thereof.
Item#5. The restructured meat product of item 2 wherein (A) further comprises from about 2% to about 20% by weight on a moisture free basis of at least one selected from the group consisting of a rice flour, a gluten free starch, and mixtures thereof.
Item#6. The restructured meat product of item 2 wherein (A) further comprises from about 1% to about 20% by weight on a moisture free basis of a soy cotyledon fiber.
Item#7. The restructured meat product of item 6 wherein (A) further comprises from about 10% to about 40% wheat gluten, by weight on a moisture free basis.
Item#8. The restructured meat product of item 7 wherein (A) further comprises from about 5% to about 15% starch, by weight on a moisture free basis.
Item#9. The restructured meat product of item 8 wherein (A) contains from about 30% to about 90% soy protein, by weight on a moisture free basis.
Item#10. The restructured meat product of item 8 wherein (A) is an extrudate having a moisture content of from about 5% to about 80%.
Item#11. The restructured meat product of item 8 wherein the comminuted meat has a moisture content of at least about 50% by weight.
Item#12. The restructured meat product of item 8 further comprising at least one of a gelling protein; an animal fat; sodium chloride; sodium tripolyphosphate; a colorant; a curing agent; a flavorant comprising beef flavor, pork flavor, or chicken flavor; or mixtures of each with the other.
Item#13. The restructured meat product of item 12 wherein the gelling protein is selected from the group consisting of a soy protein flour, a soy protein isolate and a soy protein concentrate.
Item#14. The restructured meat product of item 1 wherein the restructured meat product has a moisture content, before drying, of at least about 50% and after drying, has a moisture content of from about 15 to about 45%.
Item#15. A process for preparing a restructured meat product, comprising the steps of: hydrating
   (A) a soy protein material; and
      adding
   (B) a comminuted meat, wherein the temperature of the comminuted meat is below about 40°C; and
   mixing (A) and (B) to produce a homogeneous, and texturized meat product having a moisture content of at least about 50%.
Item#16. The process for preparing the restructured meat product of item 15 wherein the soy protein material (A) is selected from the group consisting of a soy protein flour, a soy protein isolate, a soy protein concentrate, and mixtures thereof.
Item#17. The process for preparing the restructured meat product of item 15 wherein the soy protein material (A) is a soy protein isolate.
Item#18. The process for preparing the restructured meat product of item 17 wherein (A) further comprises from about 2% to about 20% by weight on a moisture free basis of a starch and from about 2% to about 20% by weight on a moisture free basis of at least one selected from the group consisting of a wheat flour, a wheat gluten, and mixtures thereof.
Item#19. The process for preparing the restructured meat product of item 16 wherein (A) further comprises from about 2% to about 20% by weight on a moisture free basis of at least one selected from the group consisting of a rice flour, a gluten free starch, and mixtures thereof.
Item#20. The process for preparing the restructured meat product of item 16 wherein (A) further comprises from about 1% to about 20% by weight on a moisture free basis of a soy cotyledon fiber.
Item#21. The process for preparing the restructured meat product of item 20 wherein (A) further comprises from about 10% to about 40% wheat gluten, by weight on a moisture free basis.
Item#22. The process for preparing the restructured meat product of item 21 wherein (A) further comprises from about 5% to from 15% starch, by weight on a moisture free basis.
Item#23. The process for preparing the restructured meat product of item 22 wherein (A) contains from about 30% to about 90% soy protein, by weight on a moisture free basis.
Item#24. The process for preparing the restructured meat product of item 22 wherein (A) is an extrudate having a moisture content of from about 5% to about 80%.
Item#25. The process for preparing the restructured meat product of item 22 wherein the comminuted meat has a moisture content of at least about 50% by weight.
Item#26. The process for preparing the restructured meat product of item 24 wherein (A) has a moisture content of from about 6% to about 13%.
Item#27. The process for preparing the restructured meat product of item 24 wherein (A) has a moisture content of from about 16% to about 30%.
Item#28. The process for preparing the restructured meat product of item 24 wherein (A) has a moisture content of from about 50% to about 80%.
Item#29. The process for preparing the restructured meat product of item 15 wherein the temperature of the comminuted meat is from about -4°C to about 6°C.
Item#30. The process for preparing the restructured meat product of item 15 wherein the weight ratio of the soy protein material (A) on a moisture free basis to the comminuted meat on a moisture free basis is from about 1:0.25 to about 50.
Item#31. The process for preparing the restructured meat product of item 15 wherein the homogeneous meat product is formed into strips, steaks, cutlets, patties, ground or generally cube-shaped for kabobs.
Item#32. The process for preparing the restructured meat product of item 15 wherein the homogeneous meat product is stuffed into permeable or impermeable casings.
Item#33. The process for preparing the restructured meat product of item 15 further comprising at least one of a gelling protein; an animal fat; sodium chloride; sodium tripolyphosphate; a colorant; a curing agent; a flavorant comprising beef flavor, pork flavor, or chicken flavor; or mixtures of each with the other.
Item#34. The process for preparing the restructured meat product of item 33 wherein the gelling protein is selected from the group consisting of a soy protein flour, a soy protein isolate and a soy protein concentrate.
Item#35. The process for preparing the restructured meat product of item 15 wherein the restructured meat product has a moisture content, before drying, of at least about 55% and after drying, has a moisture content of from about 15 to about 45%.
Item#36. A restructured meat product, comprising;
   (A) a fibrous material containing soy protein and soy cotyledon fiber, wherein said soy cotyledon fiber is present in the fibrous material in an amount of from 1% to 8%, by weight on a moisture free basis;
   (B) a comminuted meat; and
   (C) water.
Item#37. The restructured meat product of item 36 wherein the fibrous material contains wheat gluten.
Item#38. The restructured meat product of item 37 wherein the fibrous material contains from 10% to 30 % wheat gluten, by weight on a moisture free basis.
Item#39. The restructured meat product of item 37 wherein the fibrous material contains from 5% to 15% starch, by weight on a moisture free basis.
Item#40. The restructured meat product of item 37 wherein the fibrous material contains from 50% to 75% soy protein, by weight on a moisture free basis.
Item#41. The restructured meat product of item 40 wherein the soy protein is a soy protein isolate.
Item#42. The restructured meat product of item 39 wherein the soy protein is a soy protein concentrate.
Item#43. The restructured meat product of item 37 wherein the fibrous material has a moisture content of from 5% to 75%.
Item#44. The restructured meat product of item 37 wherein the fibrous material is an extrudate.
Item#45. The restructured meat product of item 36 wherein the comminuted meat has a moisture content of at least 50% by weight.
Item#46. The restructured meat product of item 36 wherein the comminuted meat is derived from an animal tissue.
Item#47. The restructured meat product of item 46 wherein the animal tissue comprises muscle tissue, organ tissue, connective tissue, skin or mixtures of each with the other.
Item#48. The restructured meat product of item 36 further comprising a gelling protein; an animal fat; sodium chloride; sodium tripolyphosphate; a colorant; a curing agent; a flavorant comprising beef flavor, pork flavor, or chicken flavor; or mixtures of each with the other.
Item#49. The restructured meat product of item 48 wherein the gelling protein is a soy protein isolate or a soy protein concentrate.
Item#50. A process for preparing a restructured meat product, comprising the steps of; hydrating
   (A) a fibrous material containing soy protein and soy cotyledon fiber, wherein said soy cotyledon fiber is present in the fibrous material in an amount of from 1% to 8%, by weight on a moisture free basis in water until the water is absorbed and the fibers are separated; and
      adding
   (B) a comminuted meat, wherein the temperature of the comminuted meat is below 10°C; and
      mixing the fibrous material and the comminuted meat to produce a homogeneous, fibrous and texturized meat product having a moisture content of at least 50%.
Item#51. The process of item 50 wherein the fibrous material is an extrudate.
Item#52. The process of item 51 wherein the fibrous material has a moisture content of from 5% to 35%.
Item#53. The process of item 52 wherein the fibrous material contains wheat gluten.
Item#54. The process of item 53 wherein the fibrous material contains from 10% to 30 % wheat gluten, by weight on a moisture free basis.
Item#55. The process of item 53 wherein the fibrous material contains from 5% to 15% starch, by weight on a moisture free basis.
Item#56. The process of item 53 wherein the fibrous material contains from 70% to 80% soy protein, by weight on a moisture free basis.
Item#57. The process of item 56 wherein the soy protein is a soy protein isolate.
Item#58. The process of item 56 wherein the soy protein is a soy protein concentrate. Item#59. The process of item 56 wherein the fibrous material has a moisture content of from 6% to 13%.
Item#60. The process of item 56 wherein the fibrous material has a moisture content of from 16% to 30%.
Item#61. The process of item 51 wherein the fibrous material has a moisture content of from 50% to 80%.
Item#62. The process of item 61 wherein the fibrous material contains wheat gluten.
Item#63. The process of item 62 wherein the fibrous material contains from 30% to 50% wheat gluten, by weight on a moisture free basis.
Item#64. The process of item 62 wherein the fibrous material contains from 1% to 5% starch, by weight on a moisture free basis.
Item#65. The process of item 62 wherein the fibrous material contains from 70% to 80% soy protein, by weight on a moisture free basis.
Item#66. The process of item 65 wherein the soy protein is a soy protein isolate.
Item#67. The process of item 65 wherein the soy protein is a soy protein concentrate.
Item#68. The process of item 65 wherein the fibrous material has a moisture content of from 60% to 75%.
Item#69. The process of item 50 wherein the comminuted meat has a moisture content of at least 50%.
Item#70. The process of item 50 wherein the comminuted meat has a moisture content of from 60% to 75%.
Item#71. The process of item 50 wherein the temperature of the comminuted meat is from -4°C to 6°C.
Item#72. The process of item 50 wherein the comminuted meat is derived from an animal tissue.
Item#73. The process of item 72 wherein the animal tissue comprises muscle tissue, organ tissue, connective tissue and skin.
Item#74. The process of item 50 wherein the weight ratio of the fibrous material on a moisture free basis to the comminuted meat on a moisture free basis is from 1:0.25 to 50.
Item#75. The process of item 50 wherein the weight ratio of the fibrous material on a moisture free basis to the comminuted meat on a moisture free basis is from 1:1 to 40.
Item#76. The process of item 50 wherein the weight ratio of the fibrous material on a moisture free basis to the comminuted meat on a moisture free basis is from 1:2 to 20.
Item#77. The process of item 50 wherein the homogeneous meat product is formed into strips, steaks, cutlets or patties.
Item#78. The process of item 50 wherein the homogeneous meat product is stuffed into permeable or impermeable casings.
Item#79. The process of item 50 further comprising a gelling protein; an animal fat; sodium chloride; sodium tripolyphosphate; a colorant; a curing agent; a flavorant comprising beef flavor, pork flavor, or chicken flavor; or mixtures of each with the other.
Item#80. The process of item 76 wherein the gelling protein is a soy protein isolate or a soy protein concentrate.
Item#81. The process of item 79 wherein the animal fat is beef fat.
Item#82. The process of item 79 wherein the colorant is caramel coloring.
Item#83. The process of item 79 wherein the curing agent is sodium nitrate.
Item#84. The process of item 80 wherein the gelling protein is present at from 2-10 by weight on a moisture free basis.

## Claims

1. A restructured meat product, comprising;
(A) a fibrous material containing soy protein, soy cotyledon fiber, wheat gluten and starch, wherein said fibrous material is an extrudate and wherein said soy cotyledon fiber is present in the fibrous material in an amount of from 1% to 8%, by weight on a moisture free basis, said wheat gluten is present in an amount of from 10% to 30% by weight on a moisture free basis, and said starch is present in the fibrous material in an amount from 5% to 15%, by weight on a moisture free basis ;
(B) a comminuted meat, wherein said comminuted meat is derived from an animal tissue comprising muscle tissue, organ tissue, connective tissue, skin or mixtures of each with the other; and
(C) water.

2. The restructured meat product of claim 1 wherein the fibrous material contains from 50% to 75% soy protein, by weight on a moisture free basis.

3. The restructured meat product of claim 1 or 2 wherein the soy protein is a soy protein isolate or a soy protein concentrate.

4. The restructured meat product of one of claims 1-3 wherein the fibrous material has a moisture content of from 5% to 75%.

5. The restructured meat product of one of claims 1-4 further comprising a gelling protein; an animal fat; sodium chloride; sodium tripolyphosphate; a colorant; a curing agent; a flavorant comprising beef flavor, pork flavor, or chicken flavor; or mixtures of each with the other.

6. The restructured meat product of claim 5 wherein the gelling protein is a soy protein isolate or a soy protein concentrate; or the animal fat is beef fat; or the colorant is caramel coloring; or the curing agent is sodium nitrate.

7. A process for preparing a restructured meat product, comprising the steps of hydrating in water until the water is absorbed and the fibers are separated:
(A) a fibrous material containing soy protein, soy cotyledon fiber, wheat gluten and starch, wherein said fibrous material is an extrudate and wherein said soy cotyledon fiber is present in the fibrous material in an amount of from 1% to 8%, by weight on a moisture free basis, said wheat gluten is present in an amount of from 10% to 30% by weight on a moisture free basis, and said starch is present in the fibrous material in an amount from 5% to 15%, by weight on a moisture free basis ; and
adding
(B) a comminuted meat, wherein said comminuted meat is derived from an animal tissue comprising muscle tissue, organ tissue, connective tissue, skin or mixtures of each with the other and the temperature of the comminuted meat is below 10°C; and
mixing the fibrous material and the comminuted meat to produce a homogeneous, fibrous and texturized meat product having a moisture content of at least 50%.

8. The process of claim 7 wherein the fibrous material has a moisture content of from 5% to 35%.

9. The process of claim 7 or 8 wherein the fibrous material contains from 70% to 80% soy protein, by weight on a moisture free basis.

10. The process of one of claims 7-9 wherein the soy protein is a soy protein isolate or a soy protein concentrate.

11. The process of one of claims 7, 9 or 10 wherein the fibrous material has a moisture content of from 50% to 80%.

12. The process of one of claims 7-11 wherein the weight ratio of the fibrous material on a moisture free basis to the comminuted meat on a moisture free basis is from 1:0.25 to 50.

13. The process of one of claims 7-12 wherein the homogeneous meat product is formed into strips, steaks, cutlets or patties or is stuffed into permeable or impermeable casings.

14. The process of one of claims 7-13 further comprising a gelling protein; an animal fat; sodium chloride; sodium tripolyphosphate; a colorant; a curing agent; a flavorant comprising beef flavor, pork flavor, or chicken flavor; or mixtures of each with the other.

15. The process of claim 14 wherein the gelling protein is a soy protein isolate or a soy protein concentrate; or the animal fat is beef fat; or the colorant is caramel coloring; or the curing agent is sodium nitrate.

## Patentansprüche

1. Restrukturiertes Fleischprodukt, das Folgendes umfasst:
(A) ein Fasermaterial, welches Sojaprotein, Sojabohnen-Keimblattfasern, Weizengluten und Stärke enthält, wobei das Fasermaterial ein Extrudat ist und wobei
- die Sojabohnen-Keimblattfasern in dem Fasermaterial in einer Menge von ab 1 Gew.-% bis 8 Gew.-% auf einer feuchtigkeitsfreien Basis vorhanden sind,
- das Weizengluten in einer Menge von ab 10 Gew.-% bis 3 0 Gew.-% auf einer feuchtigkeitsfreien Basis vorhanden ist und die
- Stärke in dem Fasermaterial in einer Menge von ab 5 Gew.-% bis 15 Gew.-% auf einer feuchtigkeitsfreien Basis vorhanden ist.
(B) ein Hackfleich, wobei das Hackfleisch aus einem Tiergewebe erhalten wurde, das Muskelgewebe, Organgewebe, Bindegewebe, Haut oder Mischungen von jedem einzelnen mit den anderen umfasst; und
(C) Wasser.

2. Restrukturiertes Fleischprodukt nach Anspruch 1, wobei das Fasermaterial von 50 Gew.-% bis 75 Gew.-% Sojaprotein auf einer feuchtigkeitsfreien Basis enthält.

3. Restrukturiertes Fleischprodukt nach Anspruch 1 oder 2, wobei das Sojaprotein ein Sojaproteinisolat oder ein Sojaproteinkonzentrat ist.

4. Restrukturiertes Fleischprodukt nach einem der Ansprüche 1 bis 3, wobei das Fasermaterial einen Feuchtigkeitsgehalt von ab 5 % bis 75 % aufweist.

5. Restrukturiertes Fleischprodukt nach einem der Ansprüche 1 bis 4, das ferner ein gelbildendes Protein, ein tierisches Fett, Natriumchlorid, Natrium-Tripolyphosphat, einen Farbstoff, ein Pökelmittel, einen Geschmacksstoff, der Rindfleisch-Geschmack, Schweinefleisch-Geschmack oder Hühnerfleisch-Geschmack umfasst, oder Mischungen, die von jedem einzelnen mit den anderen bestehen, umfasst.

6. Restrukturiertes Fleischprodukt nach Anspruch 5, wobei das gelbildende Protein ein Sojaproteinisolat oder ein Sojaproteinkonzentrat ist; oder das tierische Fett ein Rindertalg ist; oder der Farbstoff Karamell-Farbstoff ist; oder das Pökelmittel Natriumnitrat ist.

7. Verfahren zur Herstellung eines restrukturierten Fleischproduktes, welches die Schritte des Hydratisierens in Wasser umfasst, bis das Wasser absorbiert und die Fasern abgetrennt sind, von:
(A) einem Fasermaterial, welches Sojaprotein, Sojabohnen-Keimblattfasern, Weizengluten und Stärke enthält, wobei das Fasermaterial ein Extrudat ist und wobei die Sojabohnen-Keimblattfasern in dem Fasermaterial in einer Menge von ab 1 Gew.-% bis 8 Gew.-% auf einer feuchtigkeitsfreien Basis vorhanden sind, das Weizengluten in einer Menge von ab 10 Gew.-% bis 30 Gew.-% auf einer feuchtigkeitsfreien Basis vorhanden ist und die Stärke in dem Fasermaterial in einer Menge von ab 5 Gew.-% bis 15 Gew.-% auf einer feuchtigkeitsfreien Basis vorhanden ist; und
des Hinzufügen
(B) von zerkleinertem Fleisch, wobei das zerkleinerte Fleisch aus einem Tiergewebe erhalten wurde, das Muskelgewebe, Organgewebe, Bindegewebe, Haut oder Mischungen von jedem einzelnen mit den anderen umfasst und die Temperatur von dem zerkleinerten Fleisch unterhalb von 10 °C liegt; und
des Mischen des Fasermaterials und des Hackfleisches zur Herstellung eines homogenen, faserigen und texturierten Fleischproduktes mit einem Feuchtigkeitsgehalt von mindestens 50 %.

8. Verfahren nach Anspruch 7, wobei das Fasermaterial einen Feuchtigkeitsgehalt von ab 5 % bis 35 % aufweist.

9. Verfahren nach Anspruch 7 oder 8, wobei das Fasermaterial von ab 70 Gew.-% bis 80 Gew.-% Sojaprotein auf einer feuchtigkeitsfreien Basis enthält.

10. Verfahren nach einem der Ansprüche 7 bis 9, wobei das Sojaprotein ein Sojaproteinisolat oder ein Sojaproteinkonzentrat ist.

11. Verfahren nach einem der Ansprüche 7, 9 oder 10, wobei das Fasermaterial einen Feuchtigkeitsgehalt von ab 50 % bis 80 % aufweist.

12. Verfahren nach einem der Ansprüche 7 bis 11, wobei das Gewichtsverhältnis von dem Fasermaterial auf einer feuchtigkeitsfreien Basis zu dem zerkleinerten fleisch auf einer feuchtigkeitsfreien Basis von ab 1:0.25 bis 50 liegt.

13. Verfahren nach einem der Ansprüche 7 bis 12, wobei das homogene Fleischprodukt in Streifen, Steaks, Koteletts oder Frikadellen geformt wird oder in durchlässige oder undurchlässige Wursthüllen gefüllt wird.

14. Verfahren nach einem der Ansprüche 7 bis 13, das ferner ein gelbildendes Protein, ein tierisches Fett, Natriumchlorid, Natrium-Tripolyphosphat, einen Farbstoff, ein Pökelmittel, einen Geschmacksstoff, der Rindfleisch-Geschmack, Schweinefleisch-Geschmack oder Hühnerfleisch-Geschmack umfasst, oder Mischungen, die aus jedem einzelnen mit den anderen bestehen, umfasst.

15. Verfahren nach Anspruch 14, wobei das gelbildende Protein ein Sojaproteinisolat oder ein Sojaproteinkonzentrat ist; oder das tierische Fett ein Rindertalg ist; oder der Farbstoff Karamell-Farbstoff ist; oder das Pökelmittel Natriumnitrat ist.

## Revendications

1. Un produit carné restructuré comprenant :
(A) un matériau fibreux contenant de la protéine de soja, de la fibre de cotylédon de soja, du gluten de blé et de l'amidon, dans lequel ledit matériau fibreux est un extrudat et dans lequel :
- la fibre de cotylédon de soja est présente dans le matériau fibreux en une quantité de 1% à 8% en poids, exprimée sur une base exempte d'humidité,
- ledit gluten de blé est présent en une quantité de 10% à 30% en poids exprimée sur une base exempte d'humidité, et
- ledit amidon est présent dans le matériau fibreux en une quantité de 5% à 15% en poids exprimée sur une base exempte d'humidité ;
(B) une viande finement hachée dans laquelle ladite viande finement hachée provient d'un tissu animal comprenant du tissu musculaire, du tissu d'organes, du tissu conjonctif, de la peau ou un des mélanges de chacun avec un autre, et
(C) de l'eau.

2. Le produit carné restructuré selon la revendication 1, dans lequel le matériau fibreux contient de 50% à 75% de protéine de soja en poids exprimés sur une base exempte d'humidité.

3. Le produit carné restructuré selon la revendication 1 ou 2, dans lequel la protéine de soja est un isolat de protéines de soja ou un concentré de protéines de soj a.

4. Le produit carné restructuré selon l'une des revendications 1 à 3, dans lequel le matériau fibreux a une teneur en humidité de 5% à 75%.

5. Le produit carné restructuré selon l'une des revendications 1 à 4, comprenant en outre une protéine gélifiante, une graisse animale, du chlorure de sodium, du tripolyphosphate de sodium, un colorant, un agent durcisseur, un agent aromatisant comprenant un arôme de boeuf, un arôme de porc ou un arôme de poulet ou un mélange de chacun avec l'autre.

6. Le produit carné restructuré selon la revendication 5, dans lequel la protéine gélifiante est un isolat de protéines de soja ou un concentré de protéines de soja, ou la graisse animale est de la graisse de boeuf, ou le colorant est un colorant caramel ou l'agent durcisseur est du nitrate de sodium.

7. Un procédé pour préparer un produit carné restructuré comprenant les étapes :
• d'hydratation dans de l'eau jusqu'à ce que l'eau soit absorbée et les fibres soient séparées
(A) d'un matériau fibreux contenant de la protéine de soja, de la fibre de cotylédon de soja, du gluten de blé et de l'amidon, dans lequel ledit matériau fibreux est un extrudat et dans lequel la fibre de cotylédon de soja est présente dans le matériau fibreux en une quantité de 1% à 8% en poids exprimée sur une base exempte d'humidité, ledit gluten de blé est présent en une quantité de 10% à 30% en poids exprimée sur une base exempte d'humidité et ledit amidon est présent dans le matériau fibreux en une quantité de 5% à 15% en poids exprimée sur une base exempte d'humidité ;
• d'ajout
(B) d'une viande finement hachée dans laquelle ladite viande finement hachée provient d'un tissu animal comprenant du tissu musculaire, du tissu d'organes, du tissu conjonctif, de la peau ou des mélanges de chacun avec les autres ; et la température de la viande finement hachée est inférieure à 10°C,
• de mélange du matériau fibreux et de la viande finement hachée pour produire un produit carné texturé, fibreux et homogène présentant une teneur en humidité d'au moins 50%.

8. Le procédé selon la revendication 7, dans lequel le matériau fibreux présente une teneur en humidité de 5% à 35%.

9. Le procédé selon la revendication 7 ou 8, dans lequel le matériau fibreux contient de 70% à 80% de la protéine de soja en poids exprimés sur une base exempte d'humidité.

10. Le procédé selon l'une des revendications 7 à 9, dans lequel la protéine de soja est un isolat de protéines de soja ou un concentré de protéine de soja.

11. Le procédé selon l'une des revendications 7, 9 ou 10, dans lequel le matériau fibreux présente une teneur de humidité de 50% à 80%.

12. Le procédé selon l'une des revendications 7 à 11, dans lequel le rapport pondéral du matériau fibreux sur une base exempte d'humidité sur la viande finement hachée sur une base exempte d'humidité est d'environ 1:0,25 à 50.

13. Le procédé selon l'une des revendications 7 à 12, dans lequel le produit carné homogène est mis sous forme de lanières, steak, côtelettes, galettes, viande hachée, ou sous forme générale de dés ou conditionnés dans des boyaux perméables ou imperméables.

14. Le procédé selon l'une des revendications 7 à 13, comprenant en outre une protéine gélifiante, une graisse animale, du chlorure de sodium, du tripolyphosphate de sodium, un colorant, un agent durcisseur, un aromatisant comprenant de l'arôme de boeuf, de l'arôme de porc ou de l'arôme de poulet ou leurs mélanges de chacun avec un autre.

15. Le procédé de la revendication 14, dans lequel la protéine gélifiante est un isolats de protéine de soja ou un concentrés de protéine de soja, ou la graisse animal est de la graisse de boeuf, ou le colorant est un colorant caramel ou l'agent durcisseur est du nitrate de sodium.
